# EUROPÄISCHE PATENTSCHRIFT

(11) **EP 4 296 554 B1**
(45) Veröffentlichungstag und Bekanntmachung des Hinweises auf die Patenterteilung: **14.05.2025**
(21) Anmeldenummer: 22180897.5
(22) Anmeldetag: 24.06.2022
(51) Int. Cl.: F16L 47/03, F16L 55/00, B29C 65/34, B29C 65/58, B29C 65/00, B29C 65/78, F16L 41/02, F16L 43/00, F16L 47/32, F16L 55/17

(54) **FITTING MIT SCHWEISSBAREN HALBSCHALEN**
FITTING WITH WELDABLE HALF-SHELLS
RACCORD AVEC DEMI-COQUES SOUDABLES

(43) Veröffentlichungstag der Anmeldung: 27.12.2023
(73) Patentinhaber: Georg Fischer Rohrleitungssysteme AG, 8201 Schaffhausen (CH)
(72) Erfinder: Petry, Dirk, 8245 Feuerthalen (CH); Breyer, Markus, 78315 Radolfzell (DE)
(74) Vertreter: Fenner, Seraina

(56) Entgegenhaltungen:
- DE-C1- 19 519 341
- FR-A1- 2 171 223
- JP-A- H11 173 483
- US-A- 5 022 685
- US-B1- 6 364 367

## Beschreibung

Die Erfindung betrifft ein Fitting zum Verbinden einer sekundären Kunststoffrohrleitung eines Doppelrohrsystems beinhaltend, zwei Halbschalen aus Kunststoff, wobei jeweils jede der Halbschalen einen integrierten Heizdraht aufweist, wobei der Heizdraht jeweils in den Bereichen der Anschlussstutzen angeordnet ist und der Heizdraht mehrere mäanderförmige Windungen aufweist, und jeweils in einer dafür vorgesehenen Nut in der Halbschale angeordnet ist und die beiden Halbschalen verbindende Verbindungselemente aufweisen, wobei das Fitting am Innenumfang der Halbschalen angeordnete Distanzelemente zur konzentrischen Anordnung des Fittings gegenüber einer primären Rohrleitung aufweist.

Doppelrohrsysteme sind entweder gesetzlich vorgeschrieben oder werden von den Endbenutzern installiert, um den unerwarteten Austritt gefährlicher Chemikalien in die Umwelt zu verhindern oder um Personenschäden vorzubeugen. Darüber hinaus werden Doppelrohrsysteme für den Schutz insbesondere kostspieliger Anlagen (Maschinen, IT-Infrastrukturen) eingesetzt. Die sekundäre Rohrleitung besteht aus einem Schutzrohr, dass das innere oder primäre fluidführende Rohr umschliesst. Sekundäre Rückhaltesysteme können entweder erdverlegt oder oberirdisch, unter Druck oder als Drainagesystem ausgeführt sein und verfügen in der Regel über eine Art Detektionssystem zur Erkennung von Leckagen. Die heutigen Systeme werden mittels einer Simultan- oder Kaskadenschweissung miteinander verbunden. Die Verbindungstechnik variiert stark von Kontinent zu Kontinent. Insbesondere in Europa werden die Verbindungen jedoch vermehrt durch eine Heißverschweißung (bei Polyolefinen) realisiert.

Aus dem Stand der Technik ist bekannt, dass bereits vorfabrizierte Fittings mit einem Innen- und Aussenfitting hergestellt werden, und diese dann jeweils mit einem Innen- und Aussenrohr verbunden werden. Aufgrund der vielen verschiedenen Durchmesser der Innen- und Aussenrohre und der unterschiedlichen Fittings wie T-Stück, Winkelstücke, usw. die vorfabriziert werden müssen, ist ein hoher Lagerbestand erforderlich, was heutzutage nicht mehr erwünscht ist. In ähnlicher Weise werden sekundäre Containment-Rohre hergestellt, indem ein kleineres Innen-/Hauptrohr in ein größeres Außen-/Containment-Rohr eingefügt und mit einem Zentrierstück versehen werden. Das Verbinden der Rohre mit den Formstücken ist dann die schwierigste Aufgabe. Bestehende Systeme erfordern eine beträchtliche Anzahl gleichzeitiger Verbindungen für eine Installation. Typische Klebeverbindungen erfolgen indem zuerst das Auftragen einer Grundierung auf beide zusammenpassenden Oberflächen aufgetragen wird; dann erfolgt das Auftragen des Zementits auf beide Oberflächen und dann das schnelle Zusammenfügen der zusammenpassenden Teile mit einer Vierteldrehung und dann das Festhalten der Teile, dreissig Sekunden bis eine Minute, bis der Zementit abbindet. Verständlicherweise ist dieses Verfahren noch schwieriger zu bewerkstelligen, wenn versucht wird, eine innere und eine äussere Verbindung gleichzeitig herzustellen. Es gibt doppelt so viele Oberflächen, die vorbereitet werden müssen, und das Innenrohr muss am Schutzrohr befestigt werden, um ein vollständiges Einsetzen der Muffe zu gewährleisten. Ausserdem wird die innere Verbindung bei Ausführung einer Simultanverbindung "blind" ausgeführt. Weitere Nachteile der bestehenden Systeme sind zudem die fehlende Möglichkeit, die innere Verbindung während der Druckprüfung zu inspizieren, und die Schwierigkeit, eine defekte Verbindung zu lokalisieren und zu reparieren, falls ein Leck auftritt.

Die DE 195 19 341 C1, FR2171223A1, US 6364367B1, JP H11-173483 und US 5022685A offenbaren mögliche Ausführungsformen von als Halbschalen ausgebildete Fittings.

Es ist Aufgabe der Erfindung ein Fitting für eine sekundäre Rohrleitung eines Doppelrohrsystems vorzuschlagen, das einfach und kostengünstig in der Herstellung ist sowie bei der Montage eine Überprüfung der Verbindungsstellen der primären und sekundären Rohrleitung möglich ist.

Diese Aufgabe wird erfindungsgemäss dadurch gelöst, dass die Verbindungselemente als separate am Fitting angeordnete Schnappverbindungen ausgebildet sind.

Das erfindungsgemässe Fitting zum Verbinden einer sekundären Kunststoffrohrleitung eines Doppelrohrsystems beinhaltend zwei Halbschalen aus Kunststoff. Die Halbschalen weisen jeweils einen integrierten Heizdraht auf, wobei der Heizdraht jeweils in den Bereichen der Anschlussstutzen angeordnet ist. Der Heizdraht weist im Bereich der Anschlussstutzen mehrere mäanderförmige Windungen auf, das heisst, der Heizdraht verläuft entlang bzw. in Nuten am Innendurchmesser der Halbschale, wobei sich der Heizdraht vorzugsweise in parallel zueinander verlaufenden Linien, welche über Radien untereinander verbunden sind erstreckt. Der Heizdraht ist in einer dafür vorgesehenen Nut in der Halbschale angeordnet, wobei der Heizdraht vorzugsweise durch Einpflügen in die Halbschale eingebracht ist. Zudem weist das Fitting die beiden Halbschalen verbindende Verbindungselemente auf. Durch die Verbindungselemente, welche entlang der Trennebene am Aussendurchmesser, vorzugsweise in regelmässigen Abständen angeordnet sind, werden die beiden Halbschalen, um eine gute Verschweissung zu erzielen zusammengespannt. Das Fitting weist am Innenumfang der Halbschalen angeordnete Distanzelemente zur konzentrischen Anordnung des Fittings gegenüber einer primären Rohrleitung auf. Die erfindungsgemässe Ausgestaltung des Fittings der sekundären Rohrleitung erlaubt es, die beiden Halbschalen um die bereits montierte primäre Rohrleitung anzulegen. So können vorab die Schweissungen bzw. Verbindungen der primären Rohrleitung überprüft werden und anschliessend die sekundäre Rohrleitung darum installiert werden.

Als vorteilhaft hat sich gezeigt, wenn die Distanzelemente als kreissegmentartige Scheiben ausgebildet sind, die am Aussendurchmesser einer primären Rohrleitung anliegen. Die Distanzelemente sind konzentrisch in der Halbschale angeordnet und vorzugsweis mit der Halbschale einteilig ausgebildet bzw. daran angespritzt. Es ist vorteilhaft wenn die Distanzelemente im mittleren Bereich der Halbschale zwischen den Bereichen der Anschlussstutzen angeordnet sind.

Vorzugsweise verläuft der Heizdraht entlang der Kante der Halbschalen. Die Halbschale wird durch eine Trennebene, welche entlang und durch die Mittelachse bzw. Längsachse des Fittings verläuft, gebildet, wodurch die offenen Kanten der Halbschale gebildet werden.

Vorzugsweise sind die im Bereich der Anschlussstutzen angeordneten Heizdrahtwindungen über den entlang der Kante verlaufenden Heizdraht untereinander verbunden sind. Dadurch wird eine gleichmässige Erwärmung erzielt.

Es ist Vorteilhaft wenn die Halbschalen eine Schweissanzeige aufweisen, dadurch wird erkannt ob eine Schweissung bereits durchgeführt wurde oder noch nicht. Die Schweissanzeige ist vorzugsweise entlang einer Kante der Halbschale angeordnet. Durch die vorzugsweise punktsymmetrische Ausbildung zweier Halbschalen, die zu einem Fitting zusammengefügt sind, weist das Fitting zwei Schweissanzeigen auf, die jeweils am Anfang und am Ende des mittleren Bereichs angeordnet sind. An den mittleren Bereich schliessen jeweils die Anschlussstutzen an.

Als bevorzugte Ausführungsform hat sich gezeigt, wenn die Verbindungselemente als separate Schnappverbindungen ausgebildet sind. Es ist vorteilhaft, wenn die Verbindungselemente entlang der Trennstelle der beiden zu einem Fitting zusammengesetzten Halbschalen angeordnet sind. Dazu weisen die Halbschalen vorzugsweise sich gegenüberliegende Durchgangsöffnungen auf in denen die Verbindungselemente bzw. Schnappverbindungen angeordnet sind oder sie sind direkt an den Halbschalen angespritzt.

Als vorteilhaft hat sich gezeigt, wenn die Schnappverbindung aus einem in die Halbschale einsetzbaren Fixierstück und einem in die Halbschale einsetzbaren Clip gebildet ist. Vorzugsweise sind die Fixierstücke auf der einen Seite der Halbschale angeordnet und auf der anderen Seite der Halbschale die Clips und in der gegenüberliegenden Halbschale entsprechend anders herum, so dass die Halbschalen miteinander verbunden werden können.

Als vorteilhaft hat sich gezeigt, wenn das Fitting als T-Stück, Winkelstück oder Bogenstück ausgebildet ist.

Vorzugsweise sind die Halbschalen symmetrisch oder punktsymmetrisch ausgebildet. Dies optimiert die wirtschaftliche Herstellung solcher Fittings.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine dreidimensionale Ansicht eines erfindungsgemässen Fittings einer sekundären Kunststoffrohrleitung,
Fig. 2 eine dreidimensionale Ansicht einer Halbschale eines erfindungsgemässen Fittings mit eingesetzten Verbindungselementen,
Fig. 3 eine dreidimensionale Ansicht einer Halbschale eines erfindungsgemässen Fittings;
Fig. 4 eine dreidimensionale Ansicht der Verbindungselemente und
Fig. 5 eine dreidimensionale Ansicht einer Halbschale mit eingelegter primären Rohrleitung.

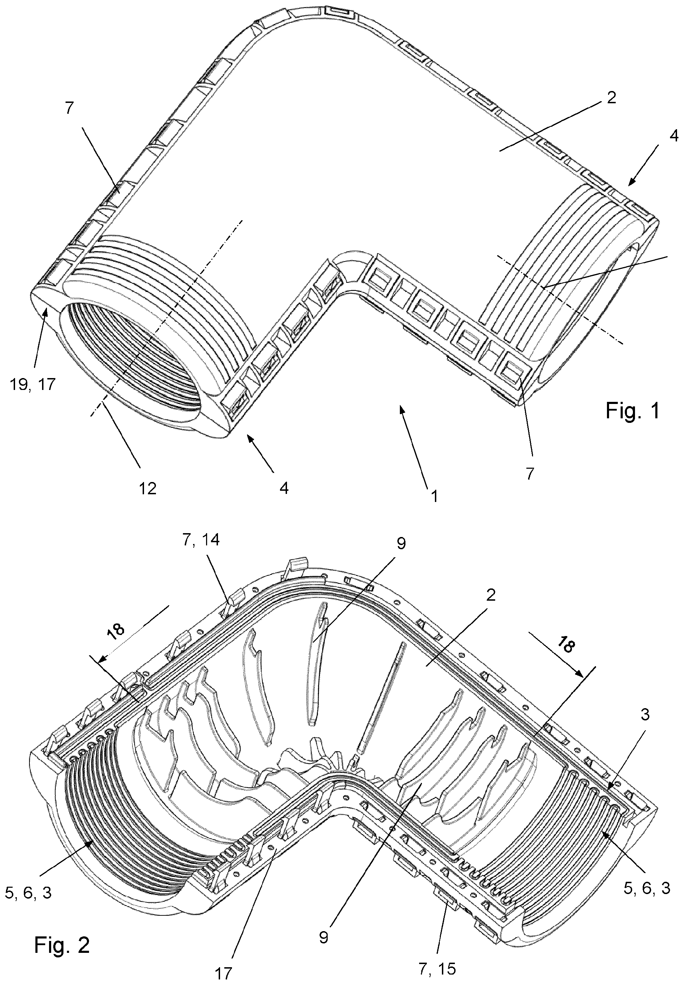

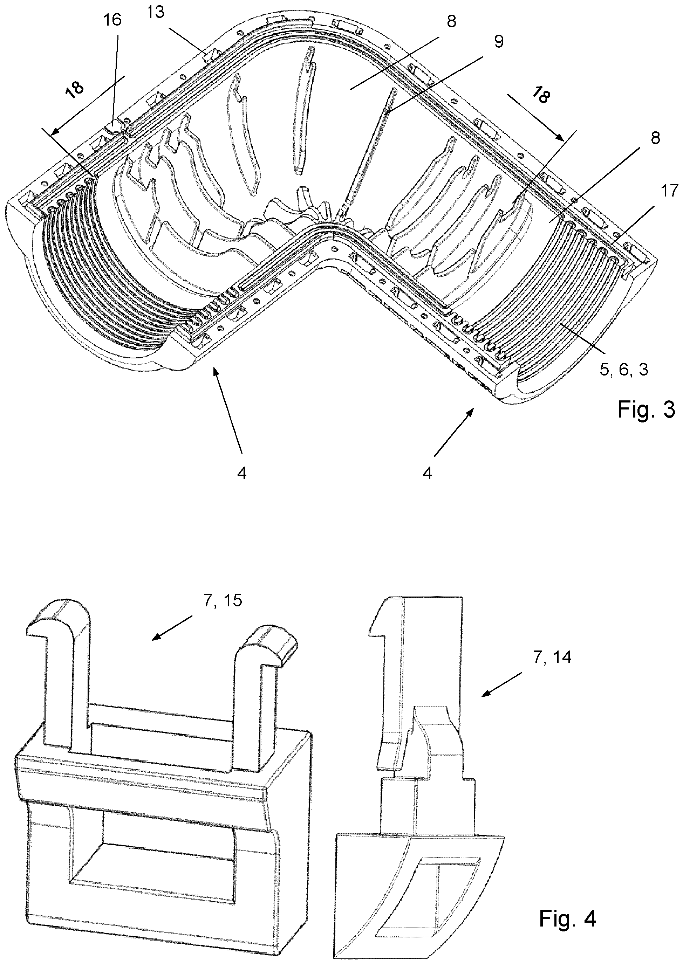

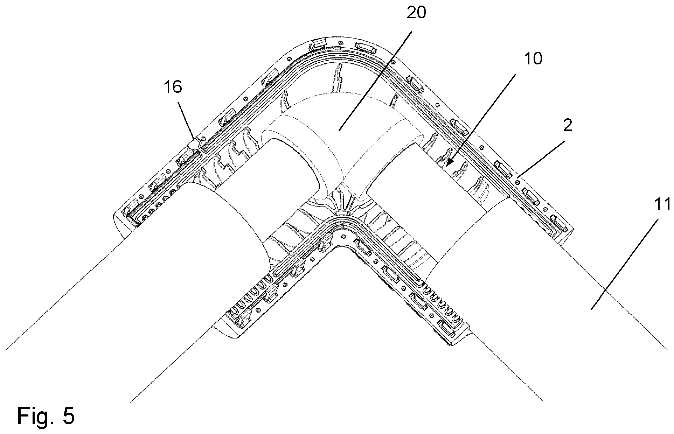

Die in Fig. 1 dargestellte Zeichnung zeigt eine dreidimensionale Ansicht eines erfindungsgemässen Fittings 1. Das Fitting 1 dient dem Verbinden einer sekundären Rohrleitung 11 eines Doppelrohrsystems und umgibt die Fittings 20 der primären Rohrleitung 10, wie auch Rohre bzw. Abschnitte der Rohre der primären Rohrleitung, was aus Fig. 5 ersichtlich ist, wo die eine Halbschale 2 des Fittings 1 zur besseren Ansicht ausgeblendet wurde. In den Figuren sind ausschliesslich Winkelstücke als Fittings 1 abgebildet, selbstverständlich fallen genauso unter dieses erfindungsgemässe Fitting 1 T-Stücke und Bogenstücke, welche die sekundäre Rohrleitung 11 verbinden. Das Fitting 1 beinhaltet zwei vorzugsweise symmetrische oder punktsymmetrisch Halbschalen 2 aus Kunststoff. Die beiden Halbschalen 2 liegen in der Trennebene 19, welche entlang der Mittelachse bzw. Längsachse 12 verläuft, aneinander, so dass sich ihre Kanten 17 kontaktieren und ein geschlossenes Fitting 1 bilden. Die Halbschalen 2 weisen einen integrierten Heizdraht 3 auf, wobei der Heizdraht 3 jeweils in den Bereichen der Abschlussstutzen 4 angeordnet ist und als mäanderförmige Windung 5 verläuft. Die Windungen 5 erstrecken sich am Innendurchmesser 8 der Halbschale 2 in den Bereichen der Anschlussstutzen 4. In diesem Bereich wird das Fitting 1 mit dem Rohr der sekundären Rohrleitung 11 verschweisst. Der Heizdraht 3 verläuft in den dafür vorgesehenen Nuten 6, wobei der Heizdraht 3 vorzugsweise eingepflügt wurde. Die beiden Halbschalen 2 sind über Verbindungselemente 7 miteinander verbunden, wobei die Verbindungselemente 7 hier als separate Teile, ausgebildet sind, welche in Fig. 4 ersichtlich sind. Wobei auch eine angespritzte Ausführungsform der Schnappverbindungen denkbar ist, die allerdings nicht unter die Ansprüche fällt. Es ist vorteilhaft wenn die Verbindungselemente 7 als Schnappverbindungen ausgebildet sind, die in den Durchgangsöffnungen 13, welche am Rand der Kanten 17 der Halbschalen 2, angeordnet sind, eingesetzt sind. Vorzugsweise sind, wie in Fig. 2 gezeigt, auf der einen Seite der Halbschale 2 die Clips 14 angeordnet und auf der anderen Seite der Halbschale 2 die Fixierstücke 15 und in der gegenüberliegenden Halbschale 2 entsprechend gegengleich, damit die Clips 14 und Fixierstücke 15 ineinander rasten. Wie in den Fig. 2 und 3 gut ersichtlich, weisen die Halbschalen 2 an ihrem Innendurchmesser 8 im mittleren Bereich 18 Distanzelemente 9 auf, welche am Fitting der primären Rohrleitung 10 anliegen. Damit wird ermöglicht, dass die Halbschalen 2 im Bereich der Anschlussstutzen 4 einen auf das sekundäre Rohr passenden Innendurchmesser aufweisen und im mittleren Bereich 18 das Fitting der primären Rohrleitung 10 formschlüssig und zentrisch im Fitting 1 angeordnet ist. Der Innendurchmesser 8 im Bereich der Anschlussstutzen 4 wird direkt mit dem Rohr der sekundären Rohrleitung verschweisst und der Fitting der primären Rohrleitung 10 formschlüssig von den beiden Halbschalen 2 des erfindungsgemässen Fittings 1 umfasst. Die Distanzelemente 9 sind vorzugsweise als kreissegmentartige Scheiben ausgebildet, die einteilig am Innendurchmesser der Halbschale 2 angeordnet sind. Die Halbschalen 2 liegen dann im montierten Zustand an den Fittings der primären Rohrleitung an und sind an den Anschlussstutzen mit den Rohren der sekundären Rohrleitung 11 verschweisst.

In Fig. 2 und 3 ist zudem gut ersichtlich, dass sich der Heizdraht 3 entlang der Kante 17 erstreckt und die Windungen 5 an den Anschlussstutzen 4 miteinander verbindet. Des Weiteren ist es vorteilhaft, wenn eine Schweissanzeige 16 an den Halbschalen 2 angeordnet ist, um zu erkennen ob die Schweissung bereits durchgeführt wurde oder nicht. Fig. 5 zeigt einen Ausschnitt aus einem Doppelrohrsystem bei dem eine Halbschale 2 ausgeblendet wurde um darzustellen wie die primäre Rohrleitung 10 bzw. Fitting darin angeordnet ist. Gut ersichtlich ist, dass die erfindungsgemässe Halbschale 2 nicht nur mit der anderen Halbschale (hier ausgeblendet) verschweisst wird sondern auch mit dem Rohr der sekundären Rohrleitung 11 und das Fitting der primären Rohrleitung 10 im erfindungsgemässen Fitting 1 formschlüssig und zentriert angeordnet ist.

### Bezugszeichenliste

- 1: Fitting
- 2: Halbschale
- 3: Heizdraht
- 4: Anschlussstutzen
- 5: Heizdrahtwindungen
- 6: Nut
- 7: Verbindungselement / Schnappverbindung
- 8: Innenumfang Halbschale
- 9: Distanzelement
- 10: Primäre Rohrleitung
- 11: Sekundäre Rohrleitung
- 12: Mittelachse, Längsachse
- 13: Durchgangsöffnung
- 14: Clip
- 15: Fixierstück
- 16: Schweissanzeige
- 17: Kanten
- 18: Mittlerer Bereich
- 19: Trennebene
- 20: Fitting primäre Rohrleitung

## Patentansprüche

1. Fitting (1) zum Verbinden einer sekundären Kunststoffrohrleitung eines Doppelrohrsystems, das Fitting beinhaltend zwei Halbschalen (2) aus Kunststoff, wobei jeweils jede der Halbschalen (2) einen integrierten Heizdraht (3) aufweist, wobei der Heizdraht (3) jeweils in den Bereichen der Anschlussstutzen (4) der Halbschalen angeordnet ist und der Heizdraht (3) mehrere mäanderförmige Windungen (5) aufweist, wobei der Heizdraht (3) jeweils in einer dafür vorgesehenen Nut (6) in der Halbschale (2) angeordnet ist und die beiden Halbschalen (2) verbindende Verbindungselemente (7) aufweisen, wobei das Fitting (1) am Innenumfang (8) der Halbschalen (2) angeordnete Distanzelemente (9) zur konzentrischen Anordnung des Fittings (1) gegenüber einer primären Rohrleitung (10) aufweist, **dadurch gekennzeichnet, dass** die Verbindungselemente (7) als separate am Fitting angeordnete Schnappverbindungen ausgebildet sind.

2. Fitting nach Anspruch 1, **dadurch gekennzeichnet, dass** die Distanzelemente (9) als kreissegmentartige Scheiben ausgebildet sind, die am Aussendurchmesser einer primären Rohrleitung (10) anliegen.

3. Fitting (1) nach einem der Ansprüche 1 oder 2, **dadurch gekennzeichnet, dass** der Heizdraht entlang der Kante der Halbschalen verläuft.

4. Fitting (1) nach einem der Ansprüche 1 bis 3, **dadurch gekennzeichnet, dass** die im Bereich der Anschlussstutzen (4) angeordneten Heizdrahtwindungen (5) über den entlang der Kante (17) verlaufenden Heizdraht (3) untereinander verbunden sind.

5. Fitting (1) nach einem der Ansprüche 1 bis 4, **dadurch gekennzeichnet, dass** die Halbschalen eine Schweissanzeige aufweisen.

6. Fitting (1) nach Anspruch 1, **dadurch gekennzeichnet, dass** die Schnappverbindung aus einem in die Halbschale (2) einsetzbaren Fixierstück (15) und einem in die Halbschale (2) einsetzbaren Clip (14) gebildet ist.

7. Fitting (1) nach einem der Ansprüche 1 bis 6, **dadurch gekennzeichnet, dass** das Fitting (1) als T-Stück, Winkelstück oder Bogenstück ausgebildet ist.

8. Fitting (1) nach einem der Ansprüche 1 bis 7, **dadurch gekennzeichnet, dass** die Halbschalen (2) symmetrisch oder punktsymmetrisch ausgebildet sind.

## Claims

1. Fitting (1) for connecting a secondary plastic pipeline of a double pipe system, the fitting containing two half-shells (2) composed of plastic, wherein in each case each of the half-shells (2) has an integrated heating wire (3), wherein the heating wire (3) is arranged in each case in the regions of the connecting pieces (4) of the half-shells and the heating wire (3) has several meandering windings (5), wherein the heating wire (3) is arranged in each case in a groove (6) provided for this in the half-shell (2) and have connecting elements (7) which connect the two half-shells (2), wherein the fitting (1) has distance elements (9) arranged on the inner circumference (8) of the half-shells (2) for concentric arrangement of the fitting (1) with respect to a primary pipeline (10), **characterized in that** the connecting elements (7) are formed as separate snap connections arranged on the fitting.

2. Fitting according to Claim 1, **characterized in that** the distance elements (9) are formed as circular segment-like discs which bear against the outer diameter of a primary pipeline (10).

3. Fitting (1) according to either one of Claims 1 and 2, **characterized in that** the heating wire runs along the edge of the half-shellss.

4. Fitting (1) according to any one of Claims 1 to 3, **characterized in that** the heating wire windings (5) arranged in the region of the connecting pieces (4) are connected to one another via the heating wire (3) running along the edge (17).

5. Fitting (1) according to any one of Claims 1 to 4, **characterized in that** the half-shells have a welding display.

6. Fitting (1) according to Claim 1, **characterized in that** the snap connection is formed from a fixing piece (15) which can be inserted into the half-shell (2) and a clip (14) which can be inserted into the half-shell (2).

7. Fitting (1) according to any one of Claims 1 to 6, **characterized in that** the fitting (1) is formed as a T-piece, elbow or curved section.

8. Fitting (1) according to any one of Claims 1 to 7, **characterized in that** the half-shells (2) are formed symmetrically or point-symmetrically.

## Revendications

1. Raccord (1) destiné à relier une conduite en matière plastique secondaire d'un système de double conduite, le raccord contenant deux demi-coques (2) en matière plastique, chacune des demi-coques (2) possédant un fil chauffant (3) intégré, le fil chauffant (3) étant respectivement disposé dans les zones des manchons de raccordement (4) des demi-coques et le fil chauffant (3) présentant plusieurs spires (5) en forme de méandres, le fil chauffant (3) étant disposé respectivement dans une rainure (6) prévue à cet effet dans la demi-coque (2) et les deux demi-coques (2) possédant des éléments de liaison (7) qui les relient, le raccord (1) possédant des éléments d'écartement (9) disposés sur le pourtour intérieur (8) des demi-coques (2) pour la disposition concentrique du raccord (1) par rapport à une conduite primaire (10), **caractérisé en ce que** les éléments de liaison (7) sont réalisés sous la forme de liaisons à encliquetage séparées disposées sur le raccord.

2. Raccord selon la revendication 1, **caractérisé en ce que** les éléments d'écartement (9) sont réalisés sous la forme de disques en forme de segments de cercle qui reposent contre le diamètre extérieur d'une conduite primaire (10).

3. Raccord (1) selon l'une des revendications 1 ou 2, **caractérisé en ce que** le fil chauffant suit un tracé le long de l'arête des demi-coques.

4. Raccord (1) selon l'une des revendications 1 à 3, **caractérisé en ce que** les spires de fil chauffant (5) qui sont disposées dans la zone des manchons de raccordement (4) sont reliées entre elles par le biais du fil chauffant (3) qui suit un tracé le long de l'arête (17).

5. Raccord (1) selon l'une des revendications 1 à 4, **caractérisé en ce que** les demi-coques possèdent un indicateur de soudure.

6. Raccord (1) selon la revendication 1, **caractérisé en ce que** la liaison par encliquetage est formée d'une pièce de blocage (15) qui peut être insérée dans la demi-coque (2) et d'un clip (14) qui peut être inséré dans la demi-coque (2).

7. Raccord (1) selon l'une des revendications 1 à 6, **caractérisé en ce que** le raccord (1) est réalisé sous la forme d'une pièce en T, d'une pièce angulaire ou d'un coude.

8. Raccord (1) selon l'une des revendications 1 à 7, **caractérisé en ce que** les demi-coques (2) sont réalisées symétriques ou à symétrie ponctuelle.
